(19) Europäisches Patentamt / European Patent Office / Office européen des brevets

(11) **EP 2 814 023 A1**

(12) **EUROPEAN PATENT APPLICATION**

(43) Date of publication:
**17.12.2014 Bulletin 2014/51**

(51) Int Cl.:
***G09G 3/34*** *(2006.01)*

(21) Application number: **13194764.0**

(22) Date of filing: **28.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.06.2013 KR 20130066649**

(71) Applicant: **Samsung Electronics Co., Ltd Gyeonggi-do 443-742 (KR)**

(72) Inventors:
• **Lee, Sang-hoon**
  **Gyeonggi-do (KR)**
• **Kang, Jeong-il**
  **Gyeonggi-do (KR)**

(74) Representative: **Brandon, Paul Laurence Appleyard Lees 15 Clare Road Halifax, HX1 2HY (GB)**

(54) **Display Device and Driving Method Thereof**

(57)    A display device (1) including a display panel (100) which displays a video signal is disclosed. The display device includes a panel driver (120, 130) configured to drive the display panel; a light source (160) configured to provide light to the display panel; a light source driver (150) configured to control the brightness of the light source in accordance with a pulse width modulation dimming signal (BDS) in synchronization with a vertical sync signal (V_sync); and a controller (140) configured to receive the vertical sync signal, determine whether the frequency of the vertical sync signal is normal or abnormal, and provide the dimming signal to the light source driver (150) in non-synchronization with the vertical sync signal during at least one frame, in response to the frequency of the vertical sync signal being abnormal.

## FIG. 1

**Description**

CROSS-REFERENCE TO RELATED APPLICATION

This application claims priority from Korean Patent Application No. 10-2013-0066649, filed on June 11, 2013 in the Korean Intellectual Property Office, the disclosure of which is incorporated herein by reference in its entirety.

BACKGROUND

Field

Apparatuses and methods consistent with the exemplary embodiments relate to a display device and a driving method thereof. More particularly, the exemplary embodiments relate to a display device and a driving method thereof which reduces flicker generated when image contents operating at different vertical frequencies are switched.

**Description of the Related Art**

In recent years, display devices have been developed to not only display a video signal, but also to provide a smart function which supports various applications based on a certain platform. Such applications may operate at different vertical frequencies in accordance with their locations of manufacture.

Therefore, when an application operating at a vertical frequency different from a basic frequency of the display device is executed, the vertical frequency of the display device has to be also changed to correspond to the contents.

In this case, the display device inevitably has a transition section where it operates at an unstable frequency during change from a previous frequency into a next frequency.

A video signal, a backlight and the like are operated in sync with a sync signal which corresponds to the vertical frequency, and therefore a flicker, or the like, is displayed on an unstable screen during the transition section. To prevent a user from having an uncomfortable experience from this, a method has been used of making the screen become black for a moment, during a video mute.

Recently, technology has been directed to a seamless display of a video signal, and thus there exists a need to maximally reduce the flicker during the transition section so that a user does have an uncomfortable experience.

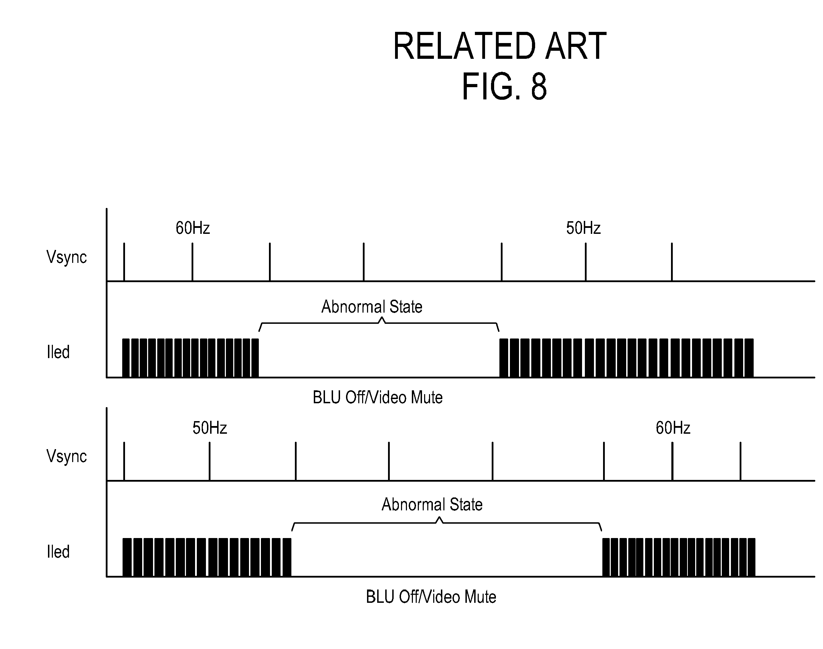

FIG. 8 illustrates a sequence where a transition image becomes black through a video mute process and the backlight is off during the transition section due to an abnormal vertical sync signal when video signals having different vertical frequencies are switched.

The above method prevents flicker, or similar abnormal phenomenon from occurring, but the problems still exists of having a seamed display of the image, under the same or similar conditions.

For example, in response to contents operating at 50Hz being reproduced in a display device operating at 60Hz, the same black screen may be displayed when the contents are reproduced and when the contents are stopped.

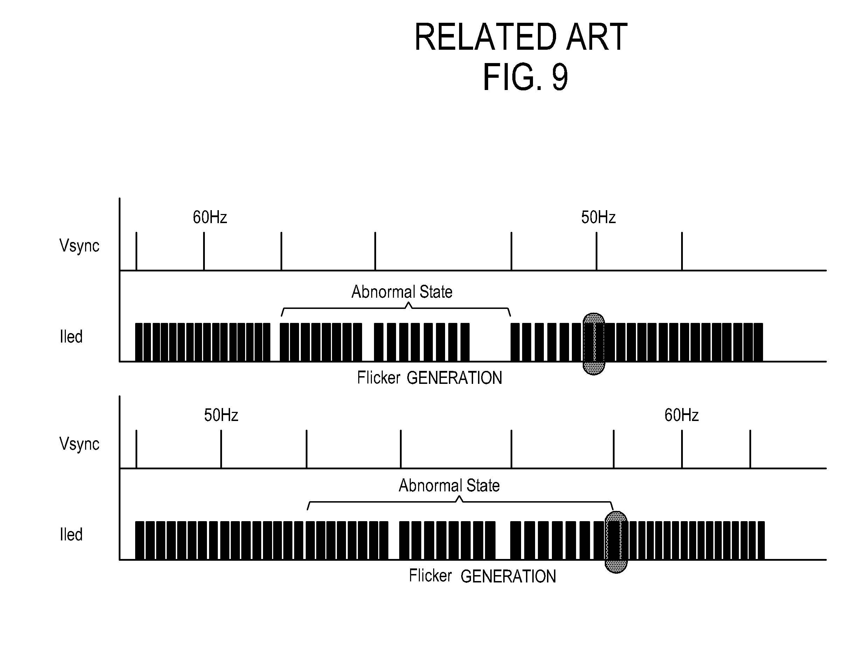

FIG. 9 illustrates a sequence where a pulse width modulation (PWM) dimming period is changed, based upon a previous frame frequency Vsync_frq (n-1) during the transition section, due to the vertical sync signal Vsync, when video signals having different vertical frequencies are switched.

This method prevents the seamed display of the image, but causes an abnormal backlight-off section in response to a previous vertical sync signal frequency Vsync_frq (n-1) being slower than the current vertical sync signal frequency Vsync_freq (n).

Further, irregular alternation of the vertical sync signal lasts for a predetermined period of time during the transition section of the vertical sync signal, and thus the flicker occurs for the predetermined period time.

For example, in response to contents operating at 50Hz being reproduced in a display device operating at 60Hz, the flicker may occur when the contents are reproduced and when the contents are stopped.

SUMMARY

One or more exemplary embodiments may provide a display device and a driving method thereof, in which a flicker is prevented when image contents operating at different vertical frequencies are switched.

Another exemplary embodiment may provide a display device and a driving method thereof, in which an image is seamlessly displayed when image contents operating at different vertical frequencies are switched with each other.

According to an aspect of an exemplary embodiment, a display device is provided; the display device including: a display panel configured to display a video signal; a panel driver configured to drive the display panel; a light source configured to provide light to the display panel; a light source driver configured to control the brightness of the light source in accordance with a dimming signal(pulse width modulation pulses) which is in synchronization with a vertical sync signal; and a controller configured to receive the vertical sync signal, determine whether the frequency of the vertical sync signal is normal or abnormal, and provide the dimming signal(PWM pulses) to the light source driver in non-synchronization with the vertical sync signal, during at least one frame in response to the frequency of the vertical sync signal being determined to be abnormal.

The display device may further include a storage configured to store, by frame, a current vertical sync signal frequency, a previous vertical sync signal frequency, and a subsequent vertical sync signal frequency.

The controller may further include a synchronizing determiner configured to determine whether the light source driver is synchronous or asynchronous with the vertical sync signal.

The controller may be configured to provide the dimming signal (PWM pulses) to the light source driver in accordance with the previous vertical sync signal frequency which is stored during the at least one frame, in response to the frequency of the vertical sync signal being determined to be abnormal.

The controller may be configured to provide the dimming signal (PWM pulses) to the light source driver in accordance with a higher frequency than the previous vertical sync signal frequency which is stored during the at least one frame, in response to the frequency of the vertical sync signal being determined to be abnormal.

The controller may set the number of pulses per frame of the dimming signal (PWM pulses) to be applied to the light source driver.

The controller may be configured to determine whether the frequency of the vertical sync signal is normal, based on a comparison between the frequency of the received vertical sync signal and the frequency of a reference vertical sync signal.

The controller may be configured to provide the dimming signal (PWM pulses) to the light source driver in accordance with a shorter period than the previous vertical sync signal stored during the at least one frame in response to the frequency of the vertical sync signal being determined to be abnormal.

The abnormality of the vertical sync signal may be generated by switching of image contents.

According to an aspect of another exemplary embodiment, a method of driving a display device is provided, the driving method including: receiving a vertical sync signal which determines a frame frequency of a display panel; determining whether a frequency of the vertical sync signal is normal or abnormal; and providing dimming signal(PWM pulses) to the light source driver in non-synchronization with the vertical sync signal during at least one frame in response to the frequency of the vertical sync signal being determined to be abnormal.

BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a block diagram which partially illustrates a display device, according to an exemplary embodiment;

FIG. 2 is a block diagram which illustrates a controller of the display device, according to an exemplary embodiment;

FIGs. 3 to 5 are views which illustrates automatic synchronous/asynchronous operation logic, according to an exemplary embodiment;

FIGs. 6 and 7 are views which illustrate a sequence for reducing flicker during automatic synchronous/asynchronous operation, according to an exemplary embodiment;

FIG. 8 illustrates a sequence where a transition image is processed to become a black screen through a video mute with the backlight off during a transition section due to an abnormal vertical sync signal, when video signals having different vertical frequencies are switched, according to the Related Art; and

FIG. 9 illustrates a sequence where a pulse width modulation (PWM) dimming period is changed based on a Vsync_frq(n-1) signal of a previous frame frequency during the transition section, due to the vertical sync signal Vsync when video signals having different vertical frequencies are switched, according to the related art.

DETAILED DESCRIPTION OF THE EXEMPLARY EMBODIMENTS

Below, exemplary embodiments will be described in detail with reference to the accompanying drawings. The drawings only describe configurations directly related to the exemplary embodiments, and the descriptions the other configurations will be omitted. However, it will be understood that the omitted configurations are not unnecessary in understanding an apparatus or system to which the exemplary embodiments are applied.

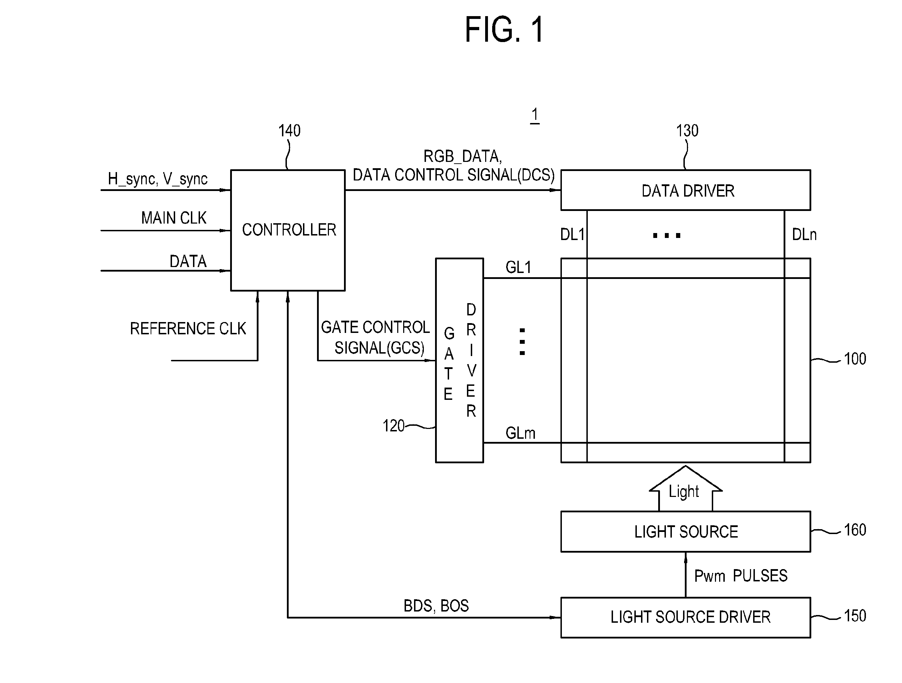

As shown in FIG. 1, a display device 1 includes a display panel 100 which display a video signal; panel drivers which drive the display panel 100; a light source 160 which provides light to the display panel 100; a light source driver 150 which controls the brightness of the light source 160, in accordance with a dimming signal; and a timing controller 140 which controls the timing of the video signal of the display panel 100.

The display device 1 may include a plurality of elements such as a video processor (not shown), a decoder (not shown), a graphic processor (not shown), a communicator (not shown), etc. in addition to the foregoing elements, and descriptions thereof will be omitted.

The display panel 100 includes a plurality of gate lines GL1 to GLm and a plurality of data lines DL1 to DLn, which intersect with each other, thin film transistors (not shown) formed at intersections thereof, and liquid crystal capacitors (not shown) connected to the thin film transistors. Although not shown, the thin film transistors may include a gate electrode branched from the plurality of gate lines GL1 to GLm, a semiconductor layer arranged on the gate electrode with an insulating layer therebetween, a source electrode branched from the plurality of data lines DL1 to DLn, and a drain electrode opposite to the source electrode. Such thin film transistors control the liquid crystal capacitors.

The panel drivers include a gate driver 120 and a data driver 130.

The gate driver 120 sequentially supplies scan signals to the plurality of gate lines GL1 to GLm in response to a gate control signal GCS generated by timing controller 140. The thin film transistors connected to the plurality of gate lines GL1 to GLm are turned on by the scan signal. The data driver 130 supplies data signals to the plurality of data lines DL1 to DLn in response to a data control signal DCS generated by the timing controller 140.

The timing controller 140 receives a horizontal sync signal H_sync, a vertical sync signal V_sync for determining the frame frequency of the display panel 100, image data DATA, a main clock CLK, and a reference clock CLK. The timing controller 140 converts the image data DATA into a format required by the data driver 130 and then transmits a pixel data RGB_DATA to the data driver 130. The timing controller 140 respectively transmits a gate control signal GCS and a data control signal DCS to the gate driver 120 and the data driver 130, thereby controlling the gate driver 120 and the data driver 130. The timing controller 140 modulates the horizontal sync signal H_sync and the vertical sync signal V_sync based on a reference clock, and transmits the dimming signal BDS and the light source driving signal BOS to the light source driver 150, based on the horizontal sync signal H_sync and the vertical sync signal V_sync.

The light source 160 may be a backlight such as a light emitting diode (LED), a fluorescent lamp, etc., which is placed behind the display panel 100 and emits light to the display panel 100 by electric power received from an exterior source. The light source 160 may include a plurality of lamps (not shown) for controlling the brightness in response to the dimming signal BDS.

The light source driver 150 adjusts the brightness of the light source 160 by controlling an electric current applied to the light source 160 using a method of pulse width modulation (PWM), under an external command of controlling the brightness. For example, the light source driver 150 control the electric current of the light source based on the dimming signal BDS transmitted from the timing controller 140 to the light source driver 150.

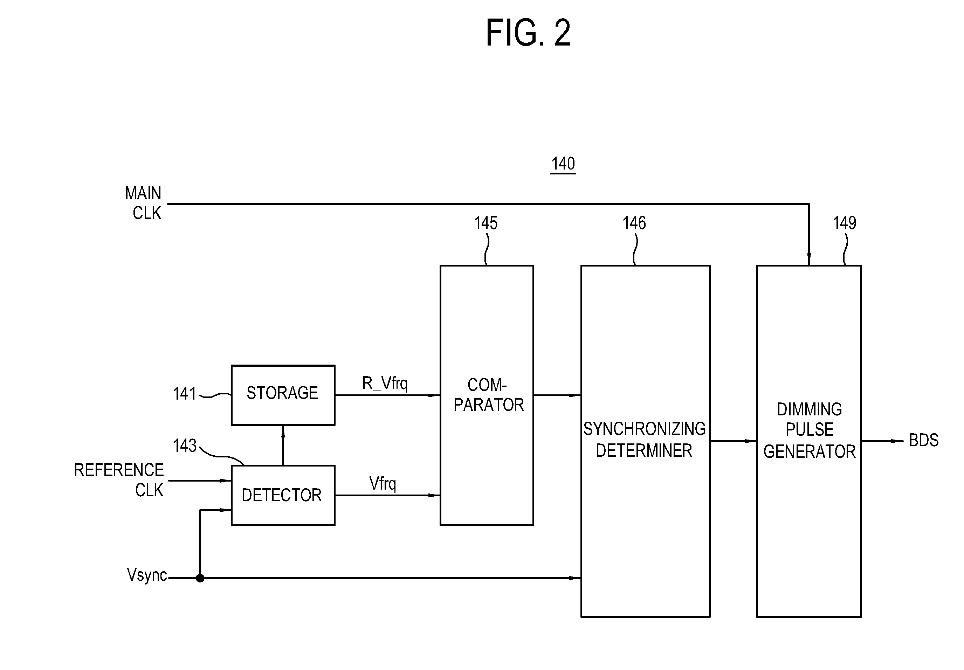

Below, the timing controller 140 will be described in detail with reference to FIG. 2. FIG. 2 is a block diagram which illustrates the timing controller 140, as shown in FIG. 1.

The timing controller 140 may include a storage 141, a detector 143, a comparator 145, a synchronizing determiner 146, and a dimming pulse generator 149.

The storage 141 may be implemented as an electrically erasable programmable read-only memory (EEPROM) such as a non-volatile flash memory in the timing controller 140. The storage 141 may previously store frequencies of the dimming signal supplied to the light source driver 150 and may control the brightness of the light source 160 (hereinafter, referred to as the dimming signal frequency BDS). In particular, the storage 141 may store a vertical sync signal Vfrq(n) of a current frame with regard to the vertical sync signal frequency V_frq, a vertical sync signal frequency Vfrq(n-1) of a previous frame, a subsequent vertical sync signal frequency Vfrq(n+1), and reference vertical sync signal frequencies R_Vfrq; R_Vfrq_min, R_Vfrq_max. The storage 141 supplies the dimming signal frequency Vfrq to the comparator 145.

The detector 143 receives the vertical sync signal V_sync and the reference clock. The detector 143 uses the reference clock to detect the frequency Vfrq of the vertical sync signal. For example, the vertical sync signal V_sync is counted by the reference clock of 1Hz, thereby detecting the vertical sync signal frequency Vfrq. The detector 143 supplies the vertical sync signal frequency Vfrq to the comparator 145.

The comparator 145 receives the reference vertical sync signal frequency R_Vfrq and the currently detected vertical sync signal frequency Vfrq. The reference vertical sync signal frequency R_Vfrq may be set up with signal frequency from one among the minimum vertical sync signal frequency R_Vfrq_min, the maximum vertical sync signal frequency R_Vfrq_max, and predetermined ranging vertical sync signal frequencies R_Vfrq_min ~ R_Vfrq_max. The comparator 145 compares the currently detected vertical sync signal frequency Vfrq and the previously set reference vertical sync signal frequency R_Vfrq, and outputs a comparison result to the synchronizing determiner 146.

The synchronizing determiner 146 determines whether the current vertical sync signal frequency is normal or abnormal, based on the result from the comparison of the comparator 145 between the currently detected vertical sync signal frequency Vfrq and the previously set reference vertical sync signal frequency R_Vfrq, thereby determining whether to make the light source 160 synchronous or asynchronous with the vertical sync signal.

For example, in the case where the minimum vertical sync signal frequency R_Vfrq_min is set up as the reference vertical sync signal frequency R_Vfrq, in response to the currently detected vertical sync signal frequency Vfrq being higher than the minimum vertical sync signal frequency R_Vfrq_min, an asynchronous mode may be selected. Otherwise, the synchronous mode may be selected. On the other hand, in the case where the maximum vertical sync signal frequency R_Vfrq_max is set up as the reference vertical sync signal frequency R_Vfrq, in response to the currently detected vertical sync signal frequency Vfrq being lower than the maximum vertical sync signal frequency R_Vfrq_max, the asynchronous mode may be selected. Otherwise, the synchronous mode may be selected.

In the case where the predetermined ranging vertical sync signal frequencies R_Vfrq_min - R_Vfrq_max are set up as the reference vertical sync signal frequency R_Vfrq, in response to the currently detected vertical sync signal frequency Vfrq being within the predetermined ranging vertical sync signal frequencies R_Vfrq_min ~ R_Vfrq_max, the asynchronous mode may be selected, and otherwise, the synchronous mode may be selected.

The dimming pulse generator 149 generates a dimming pulse BDS to be supplied to the light source driver 150 in accordance with the synchronous or asynchronous mode determined by the synchronizing determiner 146. The dimming pulse generator 149 determines the number of PWM pulses per frame, calculates a PWM dimming period, receives PWM dimming data, and generates a PWM dimming pulse.

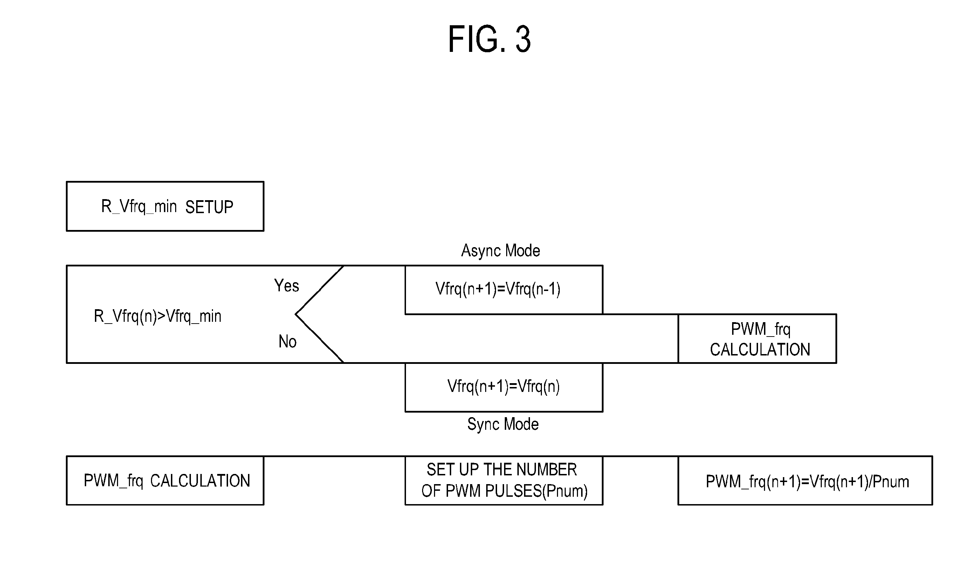

Below, operations according to an exemplary embodiment will be described in detail with reference to FIGs. 3 to 7.

As shown in FIG. 3, in response to the minimum reference frequency R_Vfrq being set up as the reference frame frequency region R_Vfrq, the timing controller 140 compares the current frame frequency Vfrq(n) detected by the detector 143 with the minimum reference frame frequency R_Vfrq_min.

In response to the detected current frame frequency Vfrq(n) being equal to or lower than the minimum reference frame frequency R_Vfrq_min (at the minimum reference of 50Hz when switched from 50Hz to 60Hz), the timing controller 140 determines that the frequency of the detected current frame is normal, i.e., the synchronous mode. The timing controller 140 sets up the current frame frequency Vfrq(n) stored in the storage 141 as the next frame frequency Vfrq(n+1) under the synchronous mode. That is, pulses having the PWM duty which correspond to the input dimming data are output in sync with the vertical sync signal Vsync, with as many pulses as the number of dimming pulses per frame set up in the next frame dimming period Tdim(n+1).

In response to the detected current frame frequency Vfrq(n) being higher than the minimum reference frame frequency R_Vfrq_min (at the reference of 50Hz when switched from 50Hz to 60Hz), the timing controller 140 determines that the frequency of the current frame is abnormal, i.e., the asynchronous mode. The timing controller 140 sets up the previous frame frequency Vfrq(n-1) stored in the storage 141 as the next frame frequency Vfrq(n+1), under the asynchronous mode. That is, the timing controller 140 continuously outputs pulses having the PWM duty which corresponds to the input dimming data regardless of the vertical sync signal in the next frame dimming period Tdim(n+1) calculated during a normal operating section, thereby minimizing the generation of abnormal pulses and thus minimizing the flicker.

The next frame dimming period Tdim(n+1) is calculated as follows.

$$Tdim(n+1) = 1/[Pnum*Vfrq(n+1)]$$

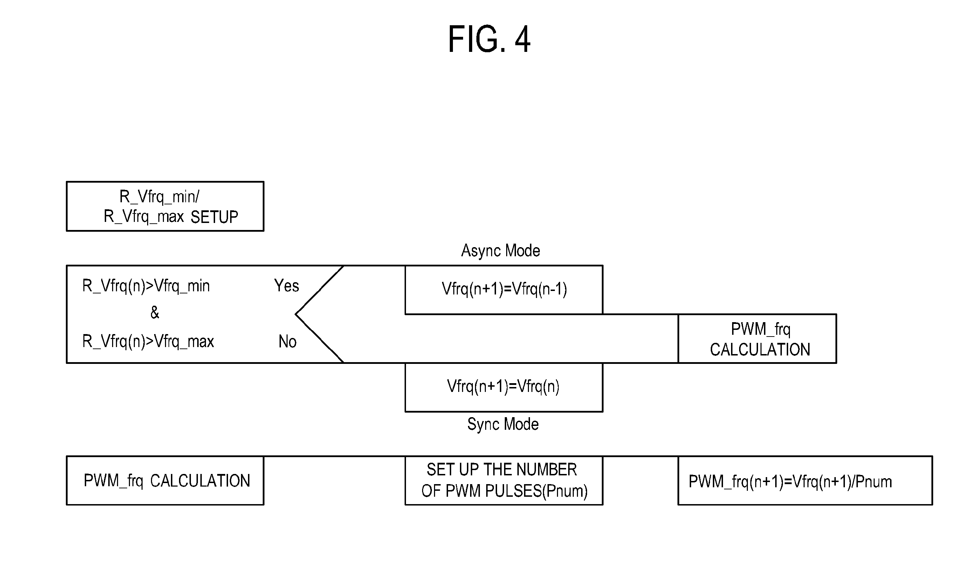

As shown in FIG. 4, in response to predetermined ranging reference frame frequencies R_Vfrq_min~R_Vfrq_max are set up as the reference frame frequency region R_Vfrq, the timing controller 140 compares the current frame frequency Vfrq(n) detected by the detector 143 with the predetermined ranging reference frame frequencies R_Vfrq_min~R_Vfrq_max.

In response to the detected current frame frequency Vfrq(n) not being within predetermined ranging reference frame frequencies R_Vfrq_min~R_Vfrq_max (at a reference range of 50Hz~60Hz when switched from 50Hz to 60Hz), the timing controller 140 determines that the frequency of the current frame is normal, i.e., the synchronous mode. The timing controller 40 sets up the current frequency (Vfrq(n) stored in the storage 141 as the next frequency Vfrq(n+1) at the synchronous mode. That is, pulses having the PWM duty which correspond to the input dimming data are output in sync with the vertical sync signal Vsync, with as many pulses as the number of dimming pulses per frame set up in the next frame dimming period Tdim(n+1).

In response to the detected current frame frequency Vfrq(n) being within predetermined ranging reference frame frequencies R_Vfrq_min~R_Vfrq_max (at a reference range of 50Hz~60Hz when switched from 50Hz to 60Hz), the timing controller 140 determines that the frequency of the current frame is abnormal, i.e., the synchronous mode. The timing controller 140 then sets up the previous frame frequency Vfrq(n-1) stored in the storage 141 as the next frame frequency Vfrq(n+1), in the asynchronous mode. That is, the timing controller 140 continuously outputs pulses having the PWM duty which corresponds to the input dimming data as the next frame dimming period Tdim(n+1), which is calculated during the normal operating section regardless of the vertical sync signal, minimizing generation of abnormal pulses and thus minimizing the flicker.

Also, in response to the maximum reference frame frequency R_Vfrq_max being set up as the reference frame frequency region R_Vfrq, the timing controller 140 compares the current frame frequency Vfrq(n) detected by the detector 143 with the maximum reference frame frequency R_Vfrq_max.

In response to the currently detected vertical sync signal frequency Vfrq being lower than the maximum vertical sync signal frequency R_Vfrq_max (at the maximum reference frequency of 60Hz when switched from 60Hz to 50Hz), the asynchronous mode is selected. Otherwise, the synchronous mode is selected. During the asynchronous mode selected as above, the previous frame frequency Vfrq_(n-1) stored in the storage 141 is set up as the next frame frequency Vfrq(n+1).

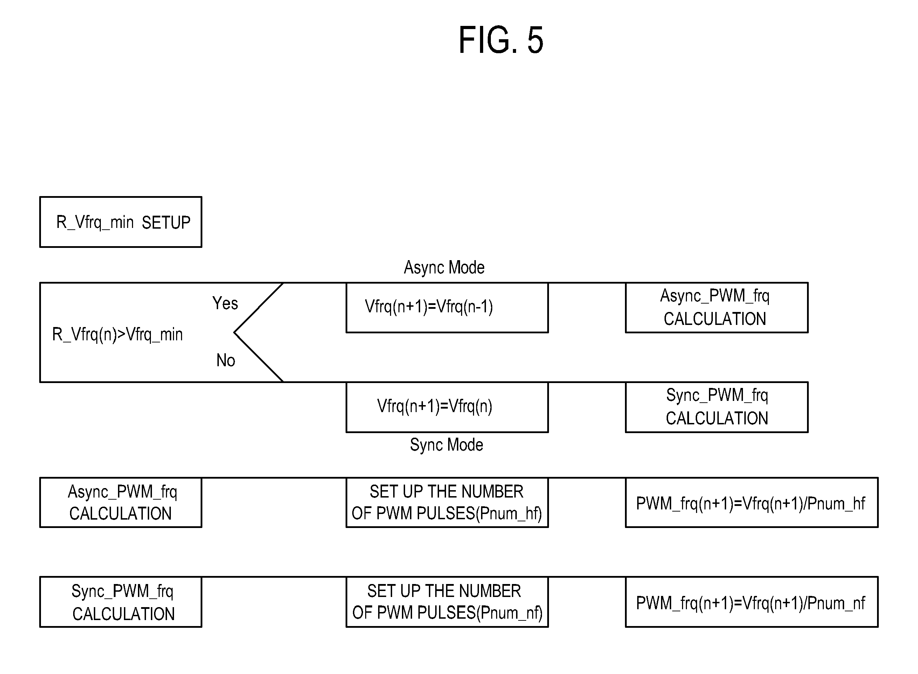

FIG. 5 is a view illustrating automatic synchronous/asynchronous operation logic according to an exemplary embodiment.

As shown in FIG. 5, in response to the minimum reference frame frequency R_Vfrq being set up as the reference frame frequency region R_Vfrq, the timing controller 140 compares the current frame frequency Vfrq(n) detected in the detector 143 with the minimum reference frame frequency R_Vfrq_min.

In response to the detected current frame frequency Vfrq(n) being equal to or lower than the minimum reference frame frequency R_Vfrq_min (at the minimum reference 50Hz when switched from 50Hz to 60Hz), the timing controller 140 determines that it is normal, i.e., the synchronous mode. The timing controller 140 sets up the current frame frequency Vfrq(n) stored in the storage 141 as the next frame frequency Vfrq(n+1) at the synchronous mode. That is, the pulses having the PWM duty which correspond to the input dimming data are output in sync with the vertical sync signal Vsync with as many pulses as the number of dimming pulses per frame set up in the next frame dimming period Tdim(n+1).

In response to the detected current frame frequency Vfrq(n) being higher than the minimum reference frame frequency R_Vfrq_min (at the reference of 50Hz when switched from 50Hz to 60Hz), the timing controller 140 determines that it is abnormal, i.e., the asynchronous mode. The timing controller 140 sets up the previous frame frequency Vfrq(n-1) stored in the storage 141 as the next frame frequency Vfrq(n+1) at the asynchronous mode. The timing controller 140 continuously outputs the pulses having the PWM duty which corresponds to the input dimming data regardless of the vertical sync signal in a period shorter than the next frame dimming period Tdim(n+1) calculated during the normal operating section. That is, high frequency pulses are provided during the next frame dimming period Tdim(n+1).

Likewise, the maximum reference frame frequency R_Vfrq_max, and predetermined ranging reference frame frequencies R_Vfrq_min ~ R_Vfrq_max may be used to determine whether the frequency of the vertical sync signal is normal or abnormal. In the case of the abnormal mode, the timing controller 140 continuously outputs the pulses having the PWM duty which correspond to the input dimming data regardless of the vertical sync signal in a period shorter than the next frame dimming period Tdim(n+1) calculated during the normal operating section. That is, high frequency pulses are provided during the next frame dimming period Tdim(n+1).

According to the automatic synchronous/asynchronous operation logic as shown in FIG. 5, not only the generation of the abnormal pulses is minimized in order to minimize the generation of the flicker, but also the probability of generating the abnormal pulses is significantly reduced during the section where the asynchronous mode is switched into the synchronous mode.

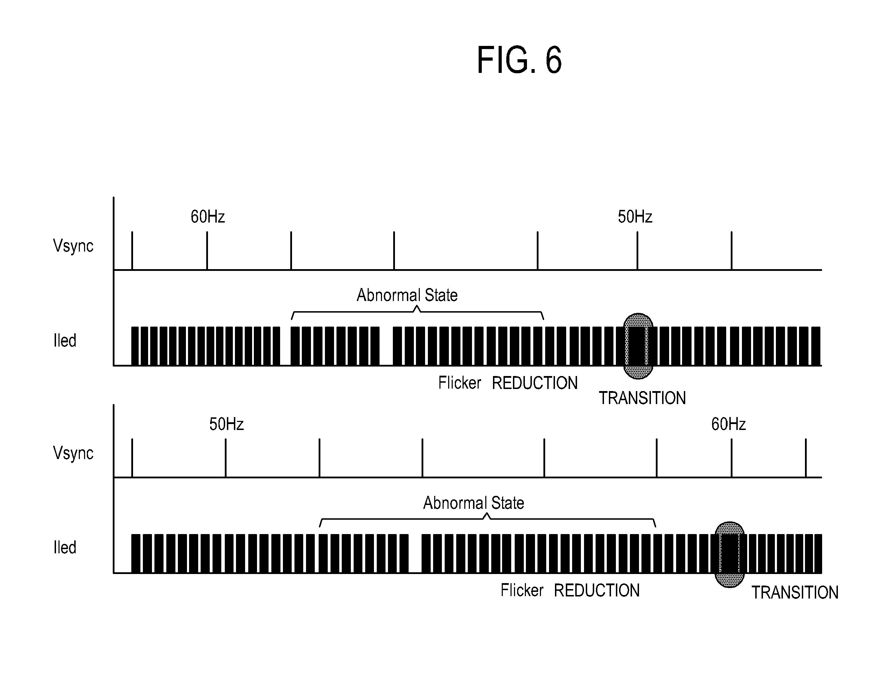

As shown in FIG. 6, in at least one frame of the transition section where the vertical frequency is changed from 60Hz to 50Hz or from 50Hz to 60Hz, the dimming pulses are not in sync with the vertical sync signal but rather are generated in accordance with the stored previous frame frequency Vfrq(n-1) and then provided to the light source driver 150, thereby reducing the transition and reducing the flicker.

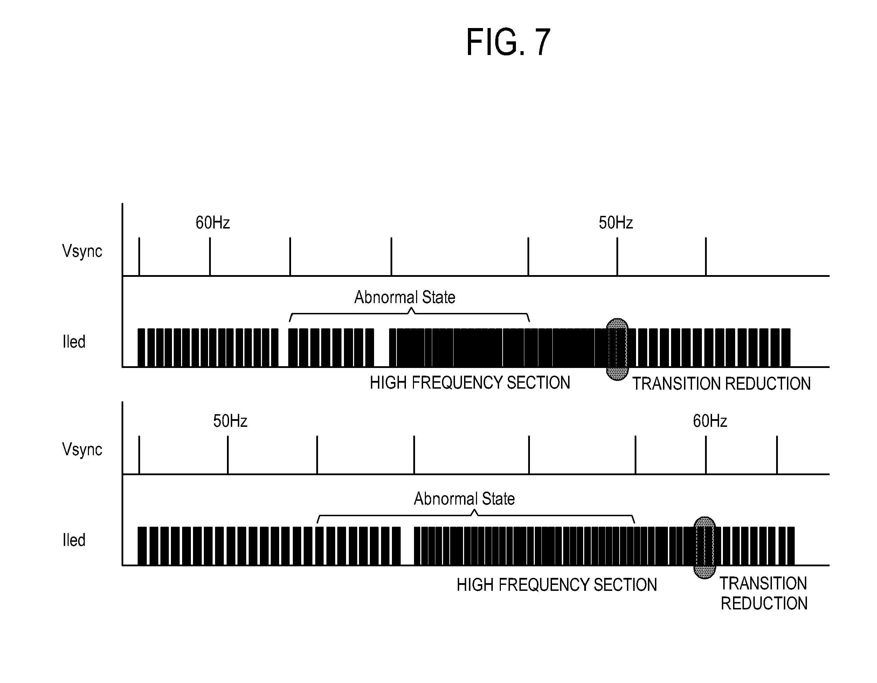

As shown in FIG. 7, in at least one frame of the transition section where the vertical frequency is changed from 60Hz to 50Hz or from 50Hz to 60Hz, the high frequency pulses are not in sync with the vertical sync signal but rather are generated in a period shorter than the next frame dimming period Tdim(n+1) calculated during the normal operating section and then provided to the light source driver 150, thereby reducing the transition and reducing the flicker.

As described above, the video signal can be seamlessly displayed during the unstable section of the vertical sync signal Vsync generated when the image contents operating at different vertical frequencies are switched, so that the state of the vertical sync signal Vsync can be detected regardless of the external logic sequence, thereby stably generating the PWM pulses in the light source driver while switching between the synchronous mode and the asynchronous mode.

According to an exemplary embodiment, the driving method of the display device prevents flicker and seamlessly displays an image when the image contents different in the vertical frequency are switched.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

## Claims

1. A display device comprising:

   a display panel configured to display a video signal;
   a panel driver configured to drive the display panel;
   a light source configured to provide light to the display panel;
   a light source driver configured to control the brightness of the light source in accordance with a dimming signal in synchronization with a vertical sync signal; and
   a controller configured to receive the vertical sync signal, determine whether the frequency of the vertical sync signal is normal or abnormal, and provide the dimming signal to the light source driver in non-synchronization with the vertical sync signal during at least one frame in response to the frequency of the vertical sync signal being abnormal.

2. The display device according to claim 1, further comprising a storage configured to store, by frame, a frequency of a current vertical sync signal, a frequency of a previous vertical sync signal, and a frequency of a subsequent vertical sync signal frequency.

**3.** The display device according to claim 1, wherein the controller further comprises a synchronizing determiner configured to determine whether the light source driver is synchronous or asynchronous with the vertical sync signal.

**4.** The display device according to claim 2, wherein the controller's configured to provide the dimming signal to the light source driver in accordance with the previous vertical sync signal frequency stored during the at least one frame in response to the frequency of the previous vertical sync signal being abnormal.

**5.** The display device according to claim 2, wherein the controller is configured to provide the dimming signal to the light source driver in accordance with a frequency higher than the previous vertical sync signal frequency stored during the at least one frame, in response to the frequency of the previous vertical sync signal being abnormal.

**6.** The display device according to claim 5, wherein the controller is configured to set up the number of pulses per frame of the dimming signal applied to the light source driver.

**7.** The display device according to claim 1, wherein the controller is configured to determine whether the frequency of the vertical sync signal is normal, based on a comparison between the received vertical sync signal frequency and a reference vertical sync signal frequency.

**8.** The display device according to claim 5, wherein the controller is configured to provide the dimming signal (PWM pulses) to the light source driver in accordance with a period shorter than the previous vertical sync signal stored during the at least one frame in response to the frequency of the previous vertical sync signal being abnormal.

**9.** The display device according to claim 1, wherein abnormality of the vertical sync signal is generated by the switching of image contents.

**10.** A method of driving a display device, the method comprising:

receiving a vertical sync signal to determine a frame frequency of a display panel;
determining whether a frequency of the vertical sync signal is normal or abnormal; and
providing dimming signalPWM pulses to a light source driver in non-synchronization with the vertical sync signal during at least one frame in response to the frequency of the vertical sync signal being abnormal.

**11.** The driving method according to claim 10, further comprising storing, by frame, a current frequency of a vertical sync signal, a frequency of a previous vertical sync signal, and a frequency of a subsequent vertical sync signal.

**12.** The driving method according to claim 10, further comprising determining whether the light source driver is synchronous or asynchronous with the vertical sync signal.

**13.** The driving method according to claim 11, wherein the dimming signal PWM pulses are provided to the light source driver in accordance with the previous vertical sync signal frequency stored during the at least one frame in response to the frequency of the previous sync signal being abnormal.

**14.** The driving method according to claim 11, wherein the PWM pulses of the dimming signal are provided to the light source driver in accordance with a frequency that is higher than the frequency of the previous vertical sync signal stored during the at least one frame in response to the frequency of the previous sync signal being abnormal.

**15.** The driving method according to claim 14, further comprising setting up the number of PWM pulses per frame of the dimming signal applied to the light source driver.

# FIG. 1

EP 2 814 023 A1

# FIG. 2

EP 2 814 023 A1

# FIG. 3

```
┌────────────────────────┐
│   R_Vfrq_min  SETUP    │
└────────────────────────┘

                                          Async Mode
┌──────────────────────────┐  Yes    ┌──────────────────────────┐
│                          │────────▶│   Vfrq(n+1)=Vfrq(n-1)    │
│   R_Vfrq(n)>Vfrq_min     │         └──────────────────────────┘        ┌──────────────────┐
│                          │  No                                         │    PWM_frq       │
│                          │─────────                                    │  CALCULATION     │
└──────────────────────────┘         ┌──────────────────────────┐        └──────────────────┘
                                     │    Vfrq(n+1)=Vfrq(n)     │
                                     └──────────────────────────┘
                                          Sync Mode
```

| PWM_frq CALCULATION | SET UP THE NUMBER OF PWM PULSES(Pnum) | PWM_frq(n+1)=Vfrq(n+1)/Pnum |

# FIG. 4

R_Vfrq_min/
R_Vfrq_max SETUP

Async Mode

R_Vfrq(n)>Vfrq_min
&
R_Vfrq(n)>Vfrq_max

Yes → Vfrq(n+1)=Vfrq(n-1)

No → Vfrq(n+1)=Vfrq(n)

PWM_frq
CALCULATION

Sync Mode

PWM_frq CALCULATION

SET UP THE NUMBER
OF PWM PULSES(Pnum)

PWM_frq(n+1)=Vfrq(n+1)/Pnum

# FIG. 5

EP 2 814 023 A1

R_Vfrq_min  SETUP

Async Mode

| R_Vfrq(n)>Vfrq_min | Yes | Vfrq(n+1)=Vfrq(n-1) | Async_PWM_frq CALCULATION |
| | No | Vfrq(n+1)=Vfrq(n) | Sync_PWM_frq CALCULATION |

Sync Mode

| Async_PWM_frq CALCULATION | SET UP THE NUMBER OF PWM PULSES(Pnum_hf) | PWM_frq(n+1)=Vfrq(n+1)/Pnum_hf |

| Sync_PWM_frq CALCULATION | SET UP THE NUMBER OF PWM PULSES(Pnum_nf) | PWM_frq(n+1)=Vfrq(n+1)/Pnum_nf |

# FIG. 6

Vsync — 60Hz ... 50Hz

Iled — Abnormal State / Flicker REDUCTION / TRANSITION

Vsync — 50Hz ... 60Hz

Iled — Abnormal State / Flicker REDUCTION / TRANSITION

# FIG. 7

Vsync

Iled

60Hz    50Hz

Abnormal State

HIGH FREQUENCY SECTION    TRANSITION REDUCTION

Vsync

Iled

50Hz    60Hz

Abnormal State

HIGH FREQUENCY SECTION    TRANSITION REDUCTION

# RELATED ART
# FIG. 8

Vsync    60Hz    50Hz

Iled    Abnormal State
BLU Off/Video Mute

Vsync    50Hz    60Hz

Iled    Abnormal State
BLU Off/Video Mute

EP 2 814 023 A1

# RELATED ART
# FIG. 9

Europäisches
Patentamt

European
Patent Office

Office européen
des brevets

# EUROPEAN SEARCH REPORT

Application Number

EP 13 19 4764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/169801 A1 (LEE JOUNG-WOO [KR] ET AL) 5 July 2012 (2012-07-05) * paragraphs [0024] - [0057]; figures 1-3 * * paragraphs [0003] - [0010] * ----- | 1-15 | INV. G09G3/34 |

TECHNICAL FIELDS
SEARCHED (IPC)

G09G

The present search report has been drawn up for all claims

| Place of search | Date of completion of the search | Examiner |
|---|---|---|
| Munich | 22 April 2014 | Demin, Stefan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 13 19 4764

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2014

| Patent document cited in search report | Publication date | Patent family member(s) | | Publication date |
|---|---|---|---|---|
| US 2012169801 A1 | 05-07-2012 | CN | 102572444 A | 11-07-2012 |
| | | KR | 20120078762 A | 11-07-2012 |
| | | TW | 201227646 A | 01-07-2012 |
| | | US | 2012169801 A1 | 05-07-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130066649